Europäisches Patentamt

European Patent Office

Office européen des brevets

(11) Publication number:

**0 145 351**
A2

## (12) EUROPEAN PATENT APPLICATION

(21) Application number: 84308008.6

(22) Date of filing: 19.11.84

(51) Int. Cl.⁴: **G 01 G 11/00**

(30) Priority: 18.11.83 JP 216046/83

(43) Date of publication of application: 19.06.85
Bulletin 85/25

(84) Designated Contracting States: **AT BE CH DE FR GB IT
LI LU NL SE**

(71) Applicant: **RHEON AUTOMATIC MACHINERY CO. LTD.,
2-3, Nozawa-machi Utsunomiya-shi, Tochigi-ken (JP)**

(72) Inventor: **Urushikzaki, Seijo, 95-1 Nozawa-machi,
Utsunomiya-shi Tochigi-Ken (JP)**

(74) Representative: **Leale, Robin George et al, FRANK B.
DEHN & CO. Imperial House 15-19 Kingsway, London
WC2B 6UZ (GB)**

(54) Apparatus and method for continuously weighing and dividing dough.

(57) An apparatus and method for continuously weighing
and dividing dough into masses of a predetermined weight
while the dough is being conveyed. Dough is weighed and
weight measurements are converted into voltages. They are
integrated and compared with a reference voltage. When
the values coincide, a signal is generated resulting in the
operation of a cutter to divide the dough.

EP 0 145 351 A2

FA 146-893

## "APPARATUS AND METHOD FOR CONTINUOUSLY WEIGHING AND DIVIDING DOUGH"

This invention relates to an apparatus and method for dividing dough, such as pancake dough, bread dough, or any other kind of dough formed from flour or similar powder, into pieces of predetermined weight, and more particularly to an apparatus and method for continuously weighing and dividing dough into pieces of predetermined weight while the dough is being conveyed.

In a conventional process of making bread it is customary to manually weight and divide the dough, and such an operation is continuously repeated, in which the operator divides dough which is supplied in either lump form or as a strip delivered from a dough extruder, measures the weight of the dough on a weighing unit, and adjusts the weight until it equals a predetermined weight.

Another known process uses a volume type divider which is an example of a machine adapted for dividing dough. With this machine, dough is fed into a cylinder having a fixed volume, and a piston is advanced into the cylinder from one end thereof so as to extrude dough of a constant quantity. However, in such an apparatus in which dough is measured by volume, the dough will not have the same weight if the density of the dough is not uniform, thus frequently resulting in great weight variations. Further, since the dough is extruded under high pressure by movement of the piston, the network structure of gluten in the dough tends to be destroyed, thus frequently resulting in a loss of dough quality. Therefore, when such an extruding apparatus is used, an "aging" step for the dough is additionally required after the division of the dough to remedy the loss of the gluten structure, and this makes the bread-making process more complex.

In each of the prior art processes described above, the weighing and division of dough is carried out intermittently. Therefore, for the purpose of mass production, may operators and dividers are required, and this results in a substantial bottle-neck in the dough product manufacturing process, which acts against the reduction of labour and costs.

Viewed from one aspect the present invention provides apparatus for continuously weighing and dividing dough, comprising continuously operable dough conveying means, dough weighing means arranged to continuously measure the weight of the dough being conveyed and to emit signals indicating the measured weight of the dough, means for generating a reference weight signal, means for comparing the signals from the dough weighing means and the reference weight signal and for emitting a signal for the division of the dough, and dough dividing means operable in response to the receipt of a signal from the said signal comparing means.

Viewed from another aspect the invention provides apparatus for continuously weighing and dividing dough, comprising: continuously operable dough conveying means; dough weighing means including a load sensor for sensing the dough weight and producing a voltage in proportion to the weight measured; an integrator for integrating the weight so measured; means for determining the weight of a dough piece to be obtained by division and emitting a signal representing the thus determined weight; a calculation and control device arranged to receive the said determined weight signal and to calculate a reference weight signal; a comparator for comparing the voltage from the integrator and the reference weight signal and emitting a trigger signal for dividing the dough; a circuit for determining the timing of division; and a cutter for dividing the dough.

Viewed from a further aspect the invention provides a method of continuously weighing and dividing dough being fed on a conveyor, comprising registering a reference weight for a piece of dough obtainable by dividing the fed dough, continuously measuring the weight of the dough, continuously integrating the measurements of the weight, comparing the integrated measurement with the reference weight, and dividing the dough when the compared values coincide or when a predetermined time has lapsed thereafter.

Some embodiments of the invention will now be described by way of example and with reference to the accompanying drawings, in which:-

Fig. 1 is a side elevation view of an apparatus according to the present invention;

Fig. 2 is a block diagram showing the control unit of an embodiment of the invention;

Fig. 3 is a chart showing the voltage curves relative to time, in the line before and after the integrator;

Fig. 4 is a side elevation showing a part of another embodiment of the invention; and

Fig. 5 is a side elevation view showing a part of a further embodiment of the invention.

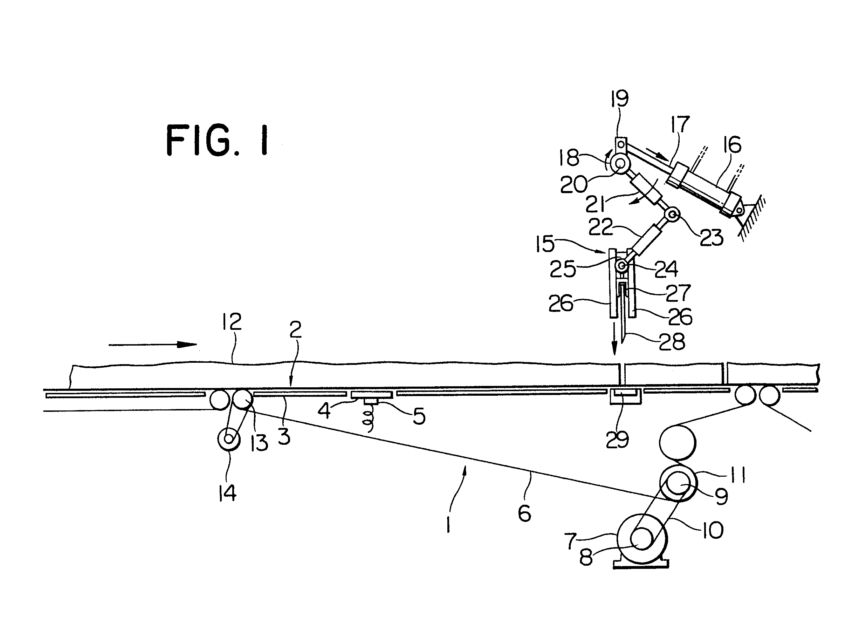

Referring to Fig. 1, an apparatus embodying the present invention includes a belt conveyor 1 and, at the upper flight 2 of the belt conveyor 1, a weighing table 4 disposed at the same level as that of a plate 3 supporting the conveyor belt 6. A load cell 5 of for sensing the weight of the dough is provided on the lower part of the weighing table 4.

The belt 6 of the conveyor 1 is driven by a motor 7 through sprockets 8, 9, a chain 10 and a drive roller 11, and a strip of dough 12 is placed on the belt 6 to be conveyed.

A rotary encoder 14 for computing the conveying speed of the belt is associated with a driven roller 13 of the conveyor 1.

A cutting unit 15 is positioned downstream of the weighing table 4 and includes an air cylinder 16 and a cutter 28 actuated by the air cylinder 16. An arm 19 of a head member 18 is linked to a piston rod 17 of the cylinder 16, and this head member 18 is rotatable relative to a shaft 20. Thus, the head member 18 rotates around the shaft 20 with the movement of the piston rod 17.

A link 21 is secured at one end to the head member 18 and is linked at the other end to a link 22 through a pin 23. The other end of the link 22 is linked to a shaft 24.

A slider 25 is mounted on the shaft 24 and is arranged to make vertical sliding movement along a guide 26. The cutter 28 is mounted to the lower part of the slider 25 through a cutter holder 27. A rubber plate 29 is provided beneath the cutter and parallel to the conveyor support plate 3 to absorb the impact of the cutter.

When compressed air is supplied to the air cylinder 16 of the cutting unit 15 to force the rod 17 in the direction of the arrow, the slider 25 makes a downward sliding movement, driven through the links 21 and 22, and the cutter 28, which extends in the widthwise direction of the belt 6, makes a downward movement to cut through the dough 12.

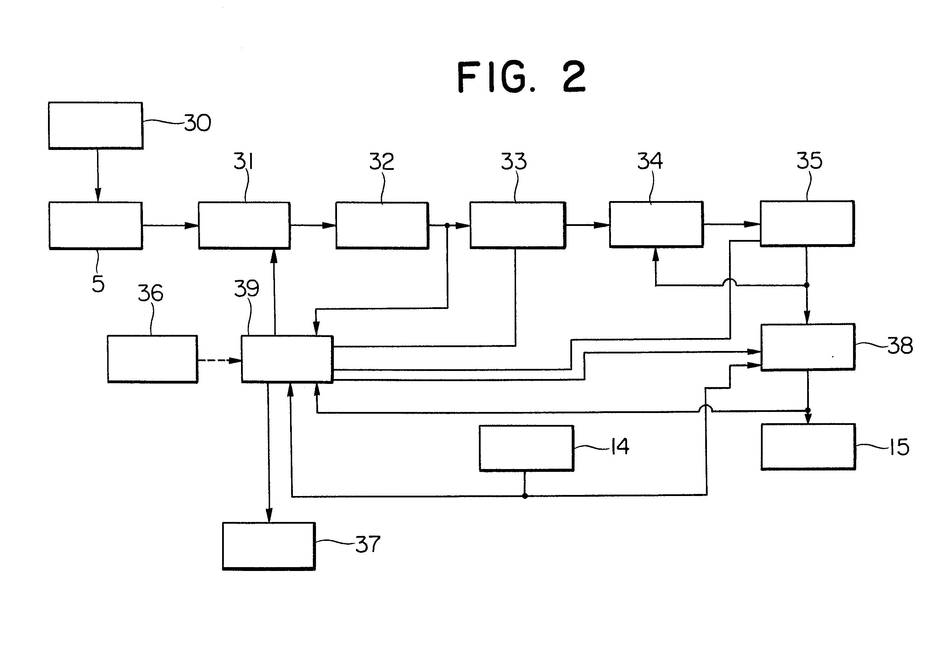

A control unit, as for example the one shown in Fig. 2, is provided for controlling the operation of the apparatus. A power source 30 applies a voltage to a load sensor, in this case the load cell 5, where the weight of the dough is sensed and converted into voltages in proportion to the weight measured. A sensor amplifier 31 amplifies the sensor voltage. A low-pass filter 32 permits only the passage of frequencies lower than 10 Hz from the sensor voltage. An attenuator 33 regulates the gain of the sensor voltage. An integrator 34 integrates the sensor voltage. A comparator 35 compares the integrated value with a set control value. A cutter actuation timing circuit 38 determines the timing of the dividion of dough. All of these elements are assisted by a microcomputer 39 to attain their purposes.

In addition, apparatus according to the invention may be provided with a divided dough weight input switch 36, and a display unit 37 for displaying the belt speed and production rate.

The operation of the control unit will now be described. When the dough 12 applies a load to the load sensor 5 associated with the weighing table 4, the load sensor produces a voltage in proportion to the applied load. The voltage as generated is amplified by the sensor amplifier 31. Since the sensor voltage includes noise due to vibration of the conveyor, etc., the low-pass filter 32 is used to remove such noise, so that frequencies higher than 10 Hz are cut off to improve the S/N ratio.

The noise-free sensor voltage is then integrated by the integrator 34 so as to find the integrated value of the weight of the continuous dough passing over the weighing table. In response to the application of a signal indicative of the divided dough weight set by the digital switch 36 on the control panel, and a pulse signal indicative of the conveyor speed applied from the rotary encoder 14, the microcomputer 39 computes the comparator reference voltage. As soon as the output voltage of the integrator attains the comparator reference voltage, the output of the integrator 34 is reset to 0 (V) by the comparator 35, and, at the same time, the comparator 35 generates a trigger signal and applies it to the cutter actuation timing circuit 38.

The cutter actuation timing circuit 38 counts the pulse signals from the rotary encoder 14 until the dough cutting position, which was situated at the centre of the weighing table 4 at the time of generation of the trigger signal, has advanced to the position of the cutter 28, and then actuates the cutting unit upon lapse of a predetermined length of time. The cutting operation is such that the cutting unit is necessarily actuated upon lapse of a predetermined length of time from the time of generation of each trigger signal, even if the time interval of generation of the individual trigger signals might vary due to variation in the thickness of the dough. Therefore, the dough 12 conveyed by the conveyor 1 is continuously divided into portions of the same weight.

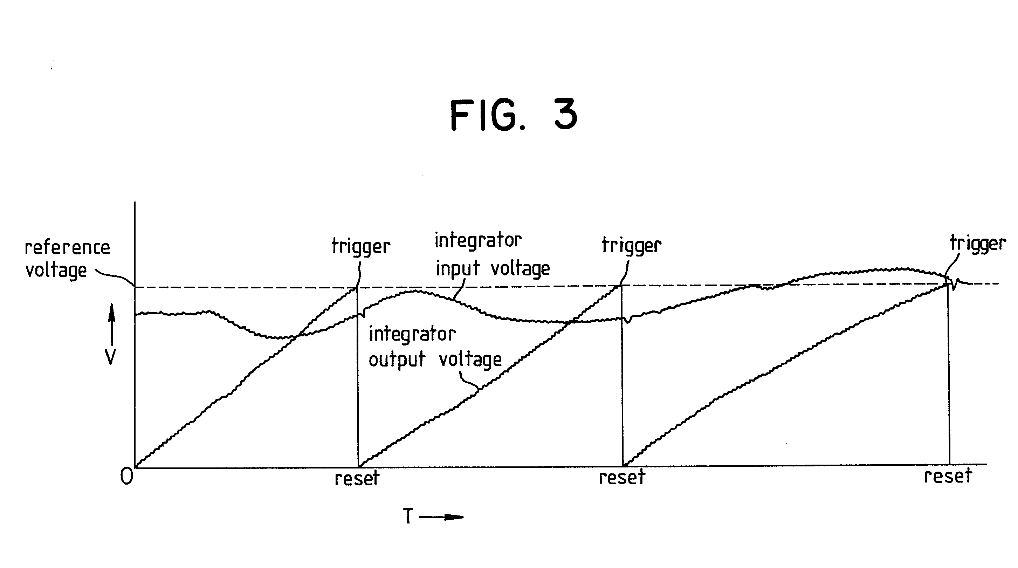

Fig. 3 illustrates variation curves in which the weight of the dough 12, varying on the weighing table with the advancing movement of the dough 12, is represented by the voltage. The integrator input voltage curve indicates dough weight variations on the weighing table, which the integrator output voltage curve indicates the result of integration of the dough weight variations. Fig. 3 illustrates that, as soon as the integrator output voltage attains the comparator reference voltage, the integrator output voltage is reset to 0 (V) as described above.

The information signal from the rotary encoder 14 concerning the conveyor speed is not required if the conveyor speed is unvariable. However, it is particularly advantageous to be able to vary the conveyor speed according to particular circumstances. If the conveyor speed is changed, it will be necessary to adjust the voltage from the load sensor 5.

Since the weight of the dough is measured while the conveyor moves at a fixed speed, the integrator output voltage values may vary if the conveyor speed changes. In order to compensate for this variation, it will be necessary to adjust the voltage in proportion to the change of the conveyor speed. Thus, if the conveyor speed is decreased, the value of the voltage indicating the integrated weight measurement should accordingly be decreased so as to be compared with the reference voltage at the comparator 35. To achieve this, the output of the low-pass filter 32 is fed to the microcomputer 39, and if the conveyor speed is changed, the encoder 14 gives a signal to the microcomputer 39, which interprets the change and gives a command signal to the attenuator 33 so as to adjust the voltage.

It is often the case that the load sensor 5 produces sizable voltages due to extraneous objects on the conveyor even when it is carrying no dough, and in such an instance the voltage indication must be adjusted to zero. To achieve this, the output from the low-pass filter 32 is transmitted to the microcomputer 39, where a signal is produced to set the output voltage from the sensor amplifier 31 at zero.

The display unit 37 indicates the belt speed and the production rate by receiving signals from the microcomputer 39, which in turn receives signals for these purposes from the cutter actuation timing circuit 38 and the rotary encoder 14. The cutter actuation timing circuit 38 provides data about the number of operations of the cutter, by pulses. The rotary encoder 14, as aforementioned, provides signals indicating the belt speed.

The above described embodiment is concerned with the weighing and division of dough conveyed by a belt conveyor. However, so long as the capability of continuous measurement of the weight of dough is maintained, the belt conveyor of the present embodiment may be replaced by any other type of conveyor, such as a roller conveyor.

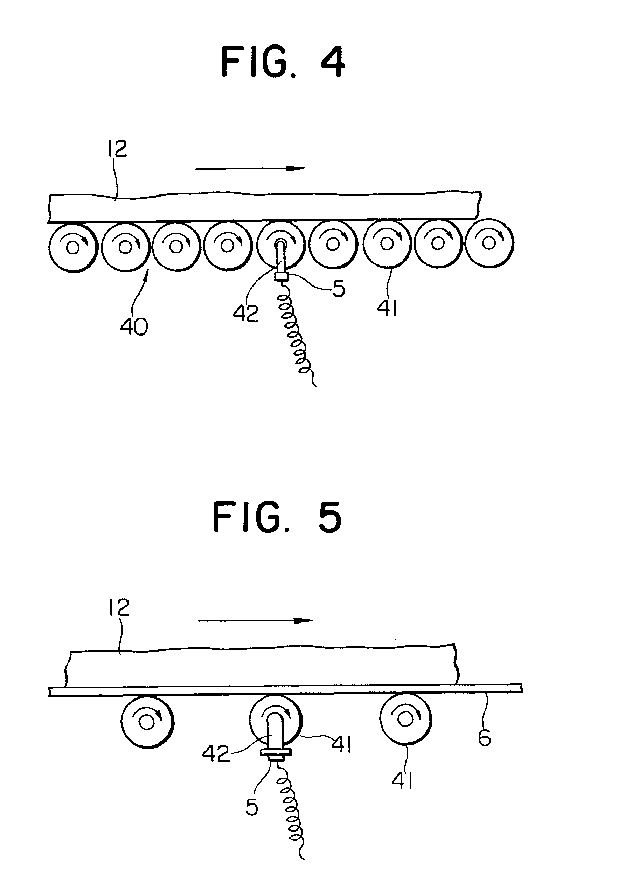

Thus in another embodiment, shown in Fig. 4, a roller conveyor 40 is used in place of the aforementioned belt conveyor. In this conveyor, dough 12 is.conveyed by rollers 41, each revolving around its own axis. A predetermined one of the rollers 41 is used for the purpose of weight measurement. The shaft of this roller 41 is supported by a bracket 42, and the load sensor 5 is mounted on this bracket 42.

Therefore, the weight of dough conveyed by the roller conveyor is loaded on the load sensor 5, and its output is applied to the control unit shown in Fig. 2, so that dough is cut at a predetermined position.

In another embodiment, shown in Fig. 5, the load sensor 5 is mounted through a bracket 42 to one of the supporting rollers 41 of a conveyor belt 6, in place of the weighing table 4. The weight of dough 12 conveyed by a belt 6 is again sensed by the load sensor 5 for the purpose of control.

Although the above described embodiments employ a method wherein the cutter is operated after the lapse of a predetermined time from the trigger signal, it is also possible within the scope of the present invention to have the cutter operated immediately upon emission of the trigger signal. In such a case the cutter 15 may be positioned above the weighing table 4, and the cutter actuation timing circuit 38 may be omitted.

Thus, in these embodiments of the present invention, dough in strip form conveyed by a conveying unit is continuously weighed by a dough weighing unit associated with the conveying unit. Therefore, even when the density of the dough, such as bread dough, varies, resulting in a corresponding variation in the thickness of the dough due to generation of gas attributable to fermentation, no error occurs in the weight of the divided portions of dough, and pieces of dough of a constant quantity can be supplied to the next station, so that the weight of the product remains constant.

Further, in the present apparatus no external force is applied to the dough during the weight measurement or the division of the dough. Therefore, no loss of quality due to destruction of the gluten structure occurs, as happens in prior art systems. Further, because an "aging" step of the dough after its division is unnecessary, the bread making process cam be simplified, and the quality of the product can be improved. Furthermore the steps of weight measurement and divison can be automated, and the operational efficiency can also be greatly improved.

It will thus be seen that the present invention, at least in its preferred embodiments, provides an apparatus which can effect weighing and division of dough without requiring operators and without adversely affecting the network tissue structure of the dough, thereby simplifying the bread-making process; and also provides an apparatus and a method for continuously weighing and dividing dough in a consistent manner such that a dough conveying means can be operated at variable speeds.

0145351

CLAIMS

1. Apparatus for continuously weighing and dividing dough, comprising continuously operable dough conveying means, dough weighing means arranged to continuously measure the weight of the dough being conveyed and to emit signals indicating the measured weight of the dough, means for generating a reference weight signal, means for comparing the signals from the dough weighing means and the reference weight signal and for emitting a signal for the division of the dough, and dough dividing means operable in response to the receipt of a signal from the said signal comparing means.

2. Apparatus for continuously weighing and dividing dough, comprising: continuously operable dough conveying means; dough weighing means including a load sensor for sensing the dough weight and producing a voltage in proportion to the weight measured; an integrator for integrating the weight so measured; means for determining the weight of a dough piece to be obtained by division and emitting a signal representing the thus determined weight; a calculation and control device arranged to receive the said determined weight signal and to calculate a reference weight signal; a comparator for comparing the voltage from the integrator and the reference weight signal and emitting a trigger signal for dividing the dough; a circuit for determining the timing of division; and a cutter for dividing the dough.

3. Apparatus according to claim 2, further comprising: means for measuring the speed of the conveying means and emitting a signal representing the speed; and an attenuator provided between the load sensor and the integrator for adjusting the gain of the sensor voltage; the calculation and control device, upon receipt of the conveyor speed signal and a sensor voltage signal, being arranged to produce a command signal for adjusting the gain of the sensor voltage.

4.    A method of continuously weighing and dividing dough being fed on a conveyor, comprising registering a reference weight for a piece of dough obtainable by dividing the fed dough, continuously measuring the weight of the dough, continuously integrating the measurements of the weight, comparing the integrated measurement with the reference weight, and dividing the dough when the compared values coincide or when a predetermined time has lapsed thereafter.

5.    A method according to claim 4, wherein a trigger signal is generated when the dough weight reaches the reference weight, and the dough is divided by operating a cutter positioned downstream of the portion of the dough to be divided after the lapse of a predetermined time from the time at which the trigger signal is generated.

6.    A method according to claims 4 or 5, comprising converting the reference weight into a reference voltage value, converting the weight of the dough as measured into a voltage value correlated to the reference voltage value, integrating the voltage value of the measured weight, and comparing the integrated value with the reference voltage value.

7.    A method according to claim 6, wherein the voltage value of the measured weight is adjusted according to the change of the conveyor speed.

# FIG. 1

0145351

# FIG. 2

# FIG. 3

# FIG. 4

# FIG. 5